Europäisches Patentamt

**European Patent Office**

Office européen des brevets

(11) Publication number: **0 088 589**
**A1**

(12) # EUROPEAN PATENT APPLICATION

(21) Application number: **83301125.7**

(22) Date of filing: **02.03.83**

(51) Int. Cl.³: **F 16 D 1/08**, F 16 D 35/00

(30) Priority: **10.03.82 US 356079**

(43) Date of publication of application: **14.09.83**
**Bulletin 83/37**

(84) Designated Contracting States: **DE FR GB IT**

(71) Applicant: **EATON CORPORATION, 100 Erieview Plaza, Cleveland Ohio 44114 (US)**

(72) Inventor: **Brown, Richard James, 703 N. Linden Street, Marshall Michigan 49068 (US)**

(74) Representative: **Douglas, John Andrew, Eaton House Staines Road, Hounslow Middlesex TW4 5DX (GB)**

(54) **Mounting shaft and adaptor for viscous coupling.**

(57) A fluid coupling (11) is attached to a pulley (25) attached to an input shaft (35) and a hub (33) having a cylindrical opening. The coupling has an output member (15) and an input member rotatably disposed within a viscous fluid chamber to transmit torque from the input member to the output member in response to relative rotation therebetween. The input member includes a shaft (17) having a boss (47) adjacent the rear surface of the output member. The boss defines a cylindrical extension (49) located within the hub opening. A locking "V" groove (51) is located within the hub opening on the extension.

Threaded openings (57) are radially disposed within the hub and have center lines off-set with respect to the center line of the "V" groove when the components are assembled. A set screw (59) in each opening has a frusto-conical surface (61) engaged with an angled surface (63) of the "V" groove to draw the coupling and input shafts together. Radial surfaces (55 and 45) perpendicular to the axis A-A of rotation are located on the boss and hub and aid alignment of and securement of the two members. The boss also includes a pilot opening (53) engaged with the input shaft to aid alignment.

ACTORUM AG

BACKGROUND OF THE DISCLOSURE

The invention relates to torque transmitting fluid couplings, and more particularly, to the mounting of such fluid couplings.

Conventionally, fluid couplings include an output coupling member defining a fluid chamber, an input coupling member rotatably disposed within the fluid chamber and a quantity of viscous fluid contained in the fluid chamber such that rotation of the input coupling member transmits torque to the output coupling member by means of viscous shear. The input coupling member is typically mounted on an input shaft, with the opposite end of the input shaft attached to some type of input drive member such as a flange associated with the engine water pump (U.S. Pat. No. 3,603,331), or a pulley driven by the engine crankshaft through one or more V-belts (U.S. Pat. Nos. 3,661,237 and 3,889,059).

It has been common practice in the art to provide ample axial separation between the pulley and the fluid coupling to facilitate access to the bolts and nuts used to attach the input shaft flange to the pulley. However, as the trend toward compact and subcompact automobiles has developed, it has become necessary to reduce the size of many of the engine accessory components, and especially their axial dimensions. This has also been true in the case of fluid couplings used in automotive applications as the drive for the vehicle radiator cooling fan.

The attempts at shortening the axial length of the entire water pump-pulley-fluid coupling assembly have included the arrangement illustrated in U.S. Pat. Nos. 4,073,370 and 3,253,783. These assemblies use an externally-threaded hub and an internally-threaded, enlarged portion on the input shaft. It is, however, undesirable to require matching threads on a coupling and the device to which the coupling is attached in instances where the two components are manufactured by unrelated companies or at separate locations.

## SUMMARY OF THE INVENTION

Accordingly, it is an object of the invention to provide a fluid cupling and assembly arrangement therefore of the type having a substantially reduced axial length.

It is also an object to provide such a fluid coupling and assembly arrangement which requires minimal matching of the assembled parts.

The above and other objects of the invention are accomplished by the provision of a fluid coupling adapted to be mounted in a cylindrical opening of a hub assembly. The fluid cupling comprises a first rotatable member defining a fluid chamber and a second rotatable member disposed within the fluid chamber. The fluid chamber includes a volume of fluid for transmitting torque from one of the first and second members to the other of the members in response to relative rotation therebetween. The second member includes a shaft and a cylindrical boss portion adapted to be located within the cylindrical opening. The boss portion defines a generally annular groove that is locatable within the opening. A plurality of threaded openings are circumferentially located in the hub assembly to receive set screws that are configured to contact the groove and retain the boss in tight engagement with the hub.

In accordance with another aspect of the invention, the boss portion may include a cylindrical opening that may be inserted over a cylindrical member of the hub assembly in a known manner to align the boss and hub assembly and, accordingly, the coupling with the driving shaft.

Another aspect of the invention is the provision of radial surfaces on the boss and hub assembly which are perpendicular to the axis of rotation of the input shaft and are used to align the coupling with the axis of the input shaft.

BRIEF DESCRIPTION OF THE DRAWINGS

FIG. 1 is a semi-schematic view of the fluid coupling and assembly arrangement of the present invention.

FIG. 2 is an enlarged sectional view of a portion of FIG. 1.

FIG. 3 is a transverse cross section taken on line 3-3 of FIG. 2.

FIG. 4 is an enlarged view of the area in circle 4 of FIG. 2.

DESCRIPTION OF THE PREFERRED EMBODIMENT

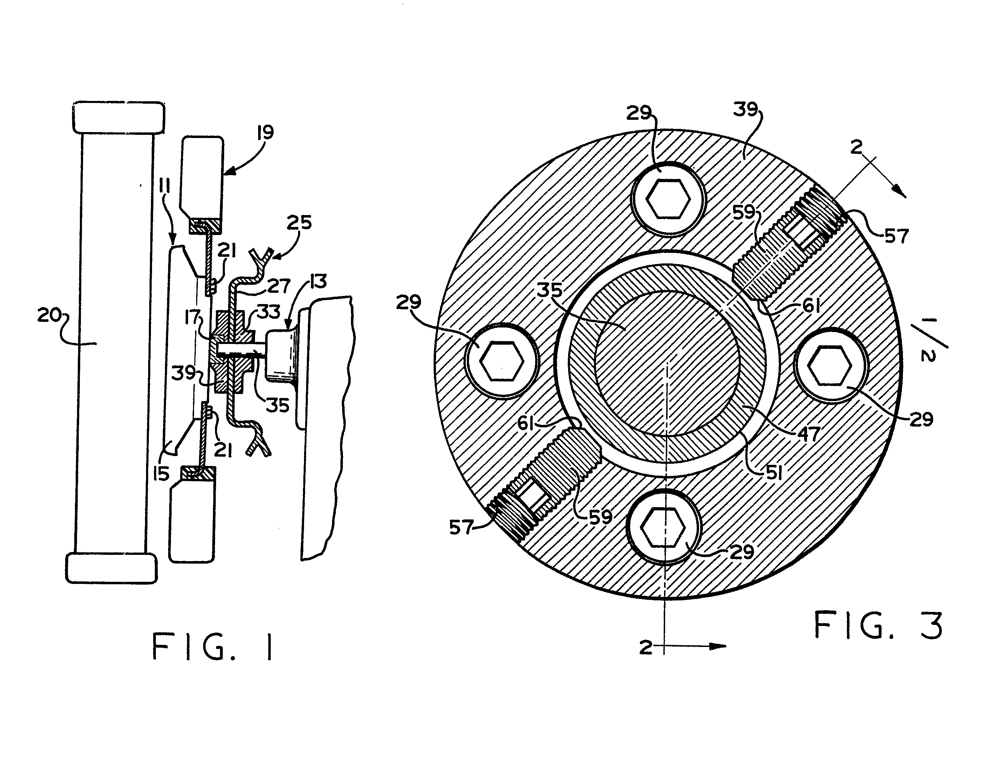

Referring now to the drawings, FIG. 1 illustrates a fluid coupling device, generally designated 11, and an assembly arrangement by which the fluid coupling 11 may be mounted on a water pump, generally designated 13. The fluid coupling 11 includes an output coupling member 15, which is driven in a known manner by an input coupling member secured to shaft 17. The fluid coupling 11 is shown herein as a drive for an automotive engine accessory, and specifically, as a drive for a vehicle radiator cooling fan. Such couplings are well known as indicated by U.S. Pat. No. 3,227,254, incorporated herein by reference. The fan 19 is typically bolted to the output coupling member 15 with a plurality of bolts 21 and is used to draw air through radiator 20. It will be understood, however, that the use of the present invention is not limited to any particular fluid coupling configuration or application.

The output coupling member 15 is mounted for rotation relative to input shaft 17 by means of a suitable bearing 23. Thus, the output coupling member 15 turns freely relative to the input coupling member and input shaft 17.

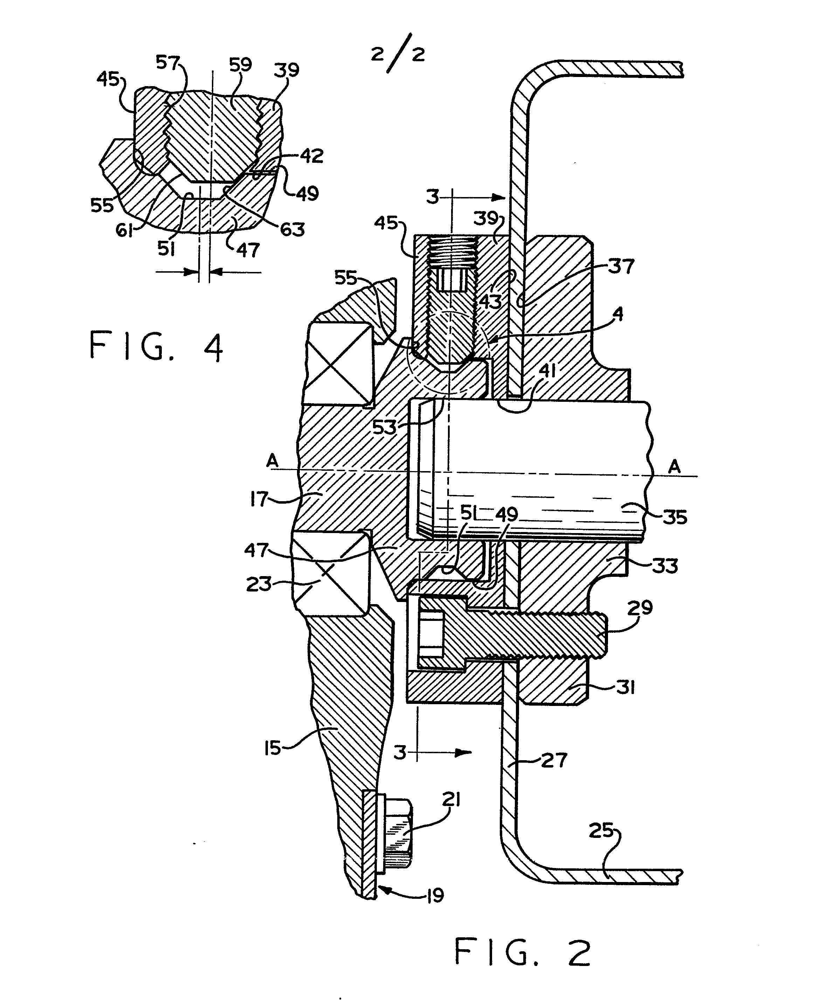

Disposed about the water pump 13 is a pulley member 25 which is driven by the engine crankshaft through a V-belt. The pulley 25 includes an annular portion 27 of reduced diameter which is attached by a plurality of bolts 29 (FIG. 2) to a flange portion 31 of a hub 33 which is rotatably disposed about a stub shaft 35 protruding from the water pump 13.

The hub 33 is preferably press fit on shaft 35 and includes a radially extending surface 37 which is perpendicular to axis A-A of shaft 35. An adaptor 39 includes a center hole 41 for concentric piloting to shaft 35 and a cylindrical opening 42 concentric with hole 41. Bolts 29 project through adaptor 39 and annular portion 27 into flange 31 to retain pulley 25. The adaptor has parallel radial surfaces 43 and 45. Surface 43 engages portion 27 and, together with hole 41, maintains surface 45 perpendicular to axis A-A. An assembled adaptor 39 rotates in a one-to-one relationship with shaft 35.

Input shaft 17 includes an enlarged boss portion 47 having a cylindrical portion 49 which includes a locking "V" groove 51. Cylindrical portion 49 is loosely received within opening 42. Radially aligned with cylindrical portion 49 is a cylindrical pilot opening 53 for aiding in the centering of shaft 17 relative to shaft 35 on axis A-A. Boss portion 47 further includes a radially extending surface 55 perpendicular to the axis of opening 53. In assembly, surface 55 contacts surface 45 of adaptor 39 to further aid in the alignment of shaft 17 with shaft 35 on axis A-A.

Referring to FIGS. 2-4, adaptor 39 further includes radially extending threaded openings 57 which are generally aligned with "V" groove 51 when boss portion 47 is located within adaptor 39. A set screw 59 is threaded within each opening 57 and includes a frusto-conical surface 61 for mating engagement with the angled surface 63 of the "V" groove. As best seen in FIG. 4, the center line of the locking "V" groove 51 is positioned off-center with respect to the center line of set screw openings 57 when the surfaces 55 and 45 are in contact. Tightening of set screws 59 against the off-set "V" groove causes a wedging action that forces the shaft 17 toward shaft 35. This forcing action moves the surfaces 55 of boss portion 47 into contact with surface 45 of adaptor 39. During movement of shaft 17 toward shaft 35, shaft 35 is free to slide within pilot opening 53 of boss portion 47.

It is contemplated that shaft 35 may be triangular, square, hexagonal, or the like and opening 53 configured for mating engagement. A similar modification is also contemplated for opening 42 and surface 49. It is further possible to shape both sets of these mating surfaces as frusto cones or the like. The important thing is to ensure the appropriate matching of the surfaces with axis A-A to assure the coaxial rotation of coupling and input shafts 17 and 35.

CLAIMS:

1.    An assembly for mounting an input shaft (35) coaxially with a fluid coupling (11) having a first rotatable member (15) defining a fluid chamber, a second rotatable member disposed within said fluid chamber, said fluid chamber including a volume of fluid for transmitting torque from one of said first and second members to the other of said first and second members in response to relative rotation therebetween and said second rotatable member including a shaft (17), said assembly comprising:

(a)    a boss portion (47) on said coupling shaft having an extension (49) defined by lines surrounding the axis of said coupling shaft;

(b)    a contact surface (63) on said extension;

(c)    a surface (55) on said boss portion extending radially relative to said coupling shaft axis;

(d)    an adaptor (39) secured to said input shaft for one-to-one rotation and having an opening (42) configured to receive said extension of said boss portion, said opening being defined by lines surrounding the axis of said input shaft;

(e)    a surface (45) on said adaptor extending radially relative to said input shaft and configured for mating engagement with said radially extending surface on said boss portion; and

(f)    means (57,59) engageable with said adaptor to contact said contact surface on said extension and force said extension into said adaptor opening and said radially extending surfaces into engagement.

2. An assembly according to claim 1 wherein:

(a) said extension is cylindrical and coaxial with the axis of said coupling shaft; and

(b) said opening in said adaptor is cylindrical and coaxial with said axis of said input shaft.

3. An assembly according to claim 2 wherein:

(a) said contact surface is defined by an angled surface on a "V" groove located on said extension; and

(b) said contacting means include

(1) a threaded opening (57) within said adaptor extending radially relative to said input shaft axis said center line of said threaded opening being off-set from the center line of said "V" groove when said radially extending surfaces on said boss portion and said adaptor are engaged; and

(2) a member (59) in threaded engagement with said threaded opening and including a frusto-conical surface adapted to be engaged with said angled surface of said "V" groove.

4. An assembly according to claim 3 wherein:

(a) said radially extending surface on said boss portion is perpendicular to said coupling shaft axis; and

(b) said radially extending surface on said adaptor is perpendicular to said input shaft axis.

5. An assembly according to claim 4 wherein said adaptor includes a pilot opening (41) for sliding engagement with said input shaft to maintain said radially extending surface of said adaptor perpendicular to said axis of said input shaft.

6. An assembly according to claim 1, 2, 3, 4, or 5 wherein: said boss portion further includes an opening (53) defined by lines surrounding the axis of said coupling shaft and radially inwardly from the surface of said extension, said opening being configured to receive said input shaft to axially align said input shaft and said coupling shaft.

7. An assembly according to claim 3 wherein said engagement means includes a plurality of said threaded openings and threaded members circumferentially arrayed around said input shaft axis.

8. An assembly according to claim 2, 3, or 4 wherein said adaptor is secured to said input shaft by a plurality of threaded members (29).

9. An assembly according to claim 1 wherein:
   (a) said contact surface is a surface at an acute angle relative to said axis; and
   (b) said contacting means is a member having a surface engageable with said contact surface.

10. An assembly according to claim 1 wherein:
   (a) said radially extending surface on said boss portion is perpendicular to said coupling shaft axis; and
   (b) said radially extending surface on said adaptor is perpendicular to said input shaft axis.

FIG. 1

FIG. 3

0088589

0088589

2/2

FIG. 4

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 013 154  (BROWN)<br><br>* Whole document * | 1,2,4,6,9,10 | F 16 D   1/08<br>F 16 D  35/00 |
| Y |  | 3,7 | |
| Y | FR-A-  961 083  (ALLIS CHALMERS)<br>* Whole document * | 3,7 | |
| D,A | US-A-4 073 370  (TINHOLT)<br><br>* Whole document * | 1-5,9,10 | |
| D,A | US-A-3 263 783  (SUTARUK)<br><br>* Whole document * | 1-5,9,10 | TECHNICAL FIELDS SEARCHED (Int. Cl. ³) |
| A | US-A-4 019 824  (PERCY)<br><br>* Whole document * | 1,3,4,9,10 | F 16 D   1/00<br>F 16 D  35/00<br>F 01 P |
| A | FR-A-  985 108  (MOULIN) | | |
| D,A | US-A-3 603 331  (TANNER) | | |
| D,A | US-A-3 661 237  (THOMPSON) | | |
| | --- -/- | | |

The present search report has been drawn up for all claims

| Place of search<br>THE HAGUE | Date of completion of the search<br>02-06-1983 | Examiner<br>BALDWIN D.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82

European Patent
Office

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl. ³) |
| D,A | US-A-3 899 059 (LEICHLITTER) --- | | |
| D,A | US-A-3 227 254 (SUTARUK) ----- | | |
| | | | **TECHNICAL FIELDS SEARCHED (Int. Cl. ³)** |
| | The present search report has been drawn up for all claims | | |

| Place of search THE HAGUE | Date of completion of the search 02-06-1983 | Examiner BALDWIN D.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82